# FASCICULE DE BREVET EUROPEEN

(11) **EP 1 485 262 B1**
(45) Date de publication et mention de la délivrance du brevet: **26.11.2008**
(21) Numéro de dépôt: 03714786.5
(22) Date de dépôt: 07.03.2003
(51) Int. Cl.: B60B 5/02

(54) **ROUE AVEC JANTE COMPOSITE REALISEE PAR PROCEDE RTM.**
RAD MIT FELGE AUS VERBUNDWERKSTOFF HERGESTELLT DURCH RTM- VERFAHREN
WHEEL WITH COMPOSITE RIM MADE BY RTM PROCESS

(30) Priorité: 11.03.2002 FR 0203030
(43) Date de publication de la demande: 15.12.2004
(73) Titulaire: Société de Technologie Michelin, 63000 Clermont-Ferrand Cedex 09 (FR); Michelin Recherche et Technique S.A., 1763 Granges-Paccot (CH)
(72) Inventeur: VERNET, Yves, F-63800 Cournon D'auvergne (FR); BONNAMOUR, Matthieu, F-63430 Pont du Chateau (FR); JARA, Adam, F-63100 Clermont-Ferrand (FR); PIRIN, Georges, F-63117 Chauriat (FR)
(74) Mandataire: Dequire, Philippe Jean-Marie Denis
(86) Numéro de dépôt international: PCT/EP2003/002346
(87) Numéro de publication internationale: WO 2003/076212

(56) Documents cités:
- EP-A- 0 796 747
- EP-A- 0 842 757
- WO-A-00/05083
- WO-A-91/07289
- WO-A-97/09181
- US-A- 4 000 926
- US-A- 4 153 657

## Description

L'invention a pour objet une roue, composée d'un disque et d'une jante, pour pneumatique, et susceptible de former éventuellement, avec un anneau de soutien de la bande de roulement du pneumatique et le pneumatique, un ensemble roulant pouvant être utile dans le cas de roulage où la pression de gonflage s'abaisse anormalement par rapport à la pression normale d'emploi, dite pression nominale de service, pression pouvant même devenir nulle. WO 97/09181 forme l'état de la technique le plus proche selon le preambule des revendications 1 et 13.

Les principales difficultés rencontrées dans le cas d'un roulage à plat ou à pression faible concernent les risques de décoincement des bourrelets du pneumatique et en particulier le décoincement du bourrelet situé du côté extérieur du pneumatique monté du côté extérieur du véhicule lors d'un roulage en virage. Les techniques proposées et bien connues pour éviter de tels décoincements, et en particulier celle consistant à disposer axialement à l'intérieur du siège extérieur de jante une saillie ou hump de faible hauteur, ne semblent pas donner entière satisfaction et tendent à augmenter les difficultés de montage et de démontage des pneumatiques.

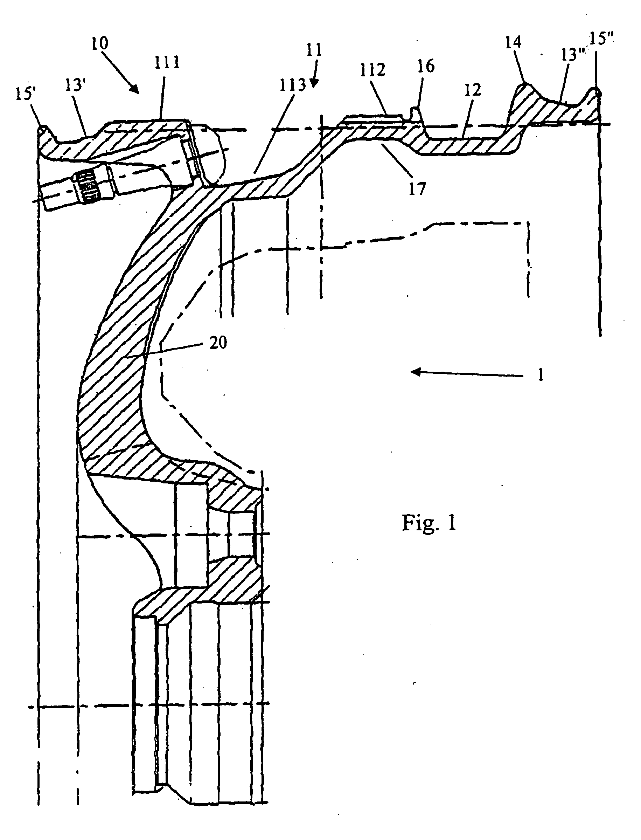

La demande WO 00/05083 décrit à titre d'exemple, en vue de résoudre efficacement le problème ci-dessus, une roue monobloc telle que montrée sur la figure 1. Cette roue a une géométrie radialement extérieure comportant un premier et un deuxième sièges destinés à recevoir un bourrelet de pneumatique, au moins le premier siège ayant une génératrice dont l'extrémité axialement extérieure est sur un cercle de diamètre inférieur au diamètre du cercle sur lequel se trouve l'extrémité axialement intérieure, lesdits sièges étant prolongés axialement à l'extérieur par une saillie ou « hump » de faible hauteur, le premier siège étant prolongé axialement à l'intérieur par une paroi cylindrique destinée à recevoir un anneau de soutien de bande de roulement. Cette roue est telle que la paroi cylindrique est constituée d'une première et d'une seconde zones séparées par une gorge circonférentielle débouchant radialement extérieurement. Elle peut être réalisée par moulage d'un alliage d'aluminium en une seule opération.

La présence de la gorge circonférentielle est destinée à diminuer significativement le poids de la roue. Cette roue optimisée en poids présente cependant l'inconvénient, lorsque le profil extérieur comprend une gorge de montage d'un pneumatique, de permettre une accumulation, sous la portion axialement extérieure relativement à la gorge de montage du profil intérieur de la jante de cette roue, de toutes sortes de matières, telles que la boue plus ou moins mélangée à des cailloux, telles que la neige ou la glace en conditions hivernales, matières difficilement évacuables.

Afin de permettre l'obtention d'une légèreté optimale et de remédier aux inconvénients ci-dessus, la roue, conforme à l'invention, a une géométrie radialement extérieure comportant un premier et un deuxième sièges destinés à recevoir un bourrelet de pneumatique, au moins le premier siège ayant une génératrice dont l'extrémité axialement extérieure est sur un cercle de diamètre inférieur au diamètre du cercle sur lequel se trouve l'extrémité axialement intérieure, lesdits sièges étant prolongés axialement à l'extérieur par une saillie ou hump de faible hauteur, ledit premier siège étant prolongé axialement à l'intérieur par une paroi cylindrique. Cette roue est caractérisée en ce qu'elle est constituée par l'assemblage :
■ d'un disque comportant une portée moyeu, une zone de transition et une zone d'accrochage à la jante située sensiblement au diamètre minimal de la jante, et
■ d'une jante avec :
   - au moins une première structure composite stratifiée constituée d'au moins un tissu de fibres longues orientées selon deux directions distinctes et imprégnées par une résine réticulée dont la paroi radialement extérieure correspond à la paroi radialement extérieure de ladite jante ou à une partie de celle-ci ;
   - au moins une seconde structure composite stratifiée constituée d'au moins un tissu de fibres longues orientées selon deux directions distinctes et imprégnées par une résine réticulée dont la paroi radialement extérieure correspond à la paroi radialement intérieure de ladite jante ou à une partie de celle-ci ; et
   - au moins une structure circonférentielle d'allégement constituée d'un matériau à faible densité, disposée radialement entre lesdites première et seconde structures composites stratifiées.

De préférence, la paroi radialement intérieure de la jante a une distance axiale qui diminue progressivement à partir dudit second siège jusqu'à la zone d'assemblage avec le disque.

Cette roue présente de nombreux avantages. Le fait que la jante comporte une ou plusieurs structures circonférentielles d'allègement constituées d'un matériau à faible densité permet de dissocier les profils radialement extérieurs et intérieurs des deux structures composites. On peut ainsi associer un profil intérieur garantissant aucune rétention d'eau, de glace ou de matières diverses à un profil extérieur avec une gorge de montage de profondeur adaptée pour un montage et un démontage aisés du pneumatique destiné à équiper cette roue. Ces structures circonférentielles de faible densité autorisent un allègement substantiel du poids de la jante tout en conservant une inertie de la partie axialement intérieure de la jante très satisfaisante.

La réalisation en deux parties de la roue donne aussi une grande liberté de style au disque qui peut être réalisé par tout procédé approprié de moulage, forgeage, etc.

De préférence, la jante de la roue est réalisée par technique RTM (Resin Transfer Moulding). Dans ce procédé, les matériaux de renfort, tels des fibres de verre, de carbone ou de tout autre type, sont prédisposés dans la cavité d'un moule. Ces matériaux de renfort constituent ainsi la « préforme » de la pièce composite finale. Cette opération de mise en place et de structuration des renforts s'appelle le « préformage ». La résine est ensuite transférée à travers la préforme dans le moule sous vide et/ou avec une pression de transfert puis réticulée aux températures appropriées.

Les tissus de renfort sec sont mis à la forme finale des structures composites stratifiées par l'utilisation d'un procédé similaire à celui décrit dans le brevet EP 0 842 757. Dans ce procédé, une préforme de jante ou d'élément de jante ayant un axe de révolution est réalisée par mise en place de fibres pré-assemblées selon deux orientations définissant des mailles déformables sur une matrice de préformage. Un enroulement d'une laize des fibres est fixé sur une circonférence de la matrice de préformage avec une orientation dissymétrique des fibres, puis on l'applique progressivement jusqu'à couvrir la totalité de la surface de la matrice de préformage en le soumettant à des tensions d'orientation sensiblement circonférentielle.

D'autre part, les structures circonférentielles constituées d'un matériau à faible densité sont moulées ou usinées à la forme souhaitée. Les préformes en tissu, ainsi que les structures circonférentielles à faible densité sont positionnées dans le moule. L'injection de résine est réalisée sous basse pression. La résine imprègne les tissus, mais ne pénètre pas dans les structures circonférentielles à faible densité. Ces structures à faible densité doivent avoir une rigidité suffisante pour résister à la pression d'injection de la résine sans déformation excessive.

La structure finale obtenue est une structure sandwich comprenant des peaux extérieures à hautes caractéristiques mécaniques et des âmes correspondant aux structures à faible densité à caractéristiques limitées. Des structures composites stratifiées de renforcement peuvent être positionnées au niveau des deux sièges de la jante. Ces renforts permettent d'augmenter les rigidités des crochets de la jante, ce qui est nécessaire la plupart du temps pour éviter un décoincement trop rapide des talons du pneumatique lorsque la pression de gonflage augmente.

De préférence, les structures circonférentielles d'allègement sont constituées d'un matériau à faible densité choisi dans le groupe des mousses de polyuréthanne (PU), de polystyrène, de polychlorure de vinyle (PVC), des mousses syntactiques (une telle mousse peut être une résine époxy mélangée avec des billes de verre creuses) et du balsa (bois léger).

Selon un mode de réalisation particulier, le bord radialement extérieur du disque s'étend axialement et radialement jusqu'à former au moins l'extrémité axialement extérieure du hump extérieur. Cela permet de réaliser aisément des roues au design « full-face ».

L'invention a aussi pour objet une roue pour pneumatique constituée par l'assemblage :
■ d'un disque comportant une portée moyeu, une zone de transition et un bord radialement extérieur ; et
■ d'une jante constituée :
   - d'au moins une première structure composite stratifiée constituée d'au moins un tissu de fibres longues orientées selon deux directions distinctes et imprégnées par une résine thermodurcissable dont la paroi radialement extérieure correspond à la paroi radialement extérieure de ladite jante ou à une partie de celle-ci ;
   - d'au moins une seconde structure composite stratifiée constituée d'au moins un tissu de fibres longues orientées selon deux directions distinctes et imprégnées par une résine thermodurcissable dont la paroi radialement extérieure correspond à la paroi radialement intérieure de ladite jante ou à une partie de celle-ci ; et
   - d'au moins une structure circonférentielle d'allégement constituée d'un matériau à faible densité, disposée radialement entre lesdites première et seconde structures composites stratifiées.

Plusieurs modes de réalisation sont maintenant décrits, à titre non limitatif, à l'aide des dessins annexés :
- la figure 1 est la roue de la figure 3 du document WO 00/05083, vue en coupe méridienne ;
- la figure 2 est une vue en coupe méridienne d'un premier mode de réalisation d'une roue selon l'invention ;
- la figure 3 est une vue en coupe méridienne d'une variante du mode de réalisation de la figure 2 ;
- la figure 4 est une vue en coupe méridienne d'un second mode de réalisation d'une roue selon l' invention ;
- la figure 5 est une vue en coupe méridienne d'un troisième mode de réalisation d'une roue selon l'invention.

La figure 1 présente, en vue méridienne et schématique, une roue 1 monobloc telle que divulguée par la demande de brevet WO 00/05083. Cette roue comprend une jante 10 un disque 20. La jante 10 comporte deux sièges de jante extérieur 13' et intérieur 13" dont les génératrices sont inclinées vers l'extérieur. Les deux sièges sont prolongés extérieurement par des saillies ou « humps » 15' et 15". Le siège extérieur 13' est prolongé axialement vers l'intérieur par une paroi cylindrique ou portée 11, elle-même munie à son autre extrémité d'une butée de positionnement 16 d'un anneau de soutien destiné à être monté sur cette portée 11. Le siège intérieur 13" est prolongé axialement à l'intérieur par un rebord de jante 14, rebord délimitant avec la butée de positionnement 16 une gorge de montage 12. La portée 11 comporte deux parties 111 et 112 séparées axialement par une gorge circonférentielle 113 débouchant radialement extérieurement. Les diamètres des deux sièges 13' et 13" sont inégaux, le premier siège 13', disposé du côté extérieur de la roue 1, a un diamètre inférieur à celui du second siège 13". Cela permet de diminuer la profondeur de la gorge de montage 12.

Les deux parties 111 et 112 de la paroi cylindrique ou portée 11 sont adaptées pour supporter un anneau de soutien de la bande de roulement du pneumatique destiné à équiper cette roue. De tels anneaux sont, à titre d'exemple, décrits dans la demande EP 0 796 747 et la demande FR 99/07469.

La gorge circonférentielle permet de diminuer substantiellement le poids de la roue 1 et facilite sa réalisation. En dépit de la profondeur limitée de la gorge de montage 12, cette roue présente radialement intérieurement une zone 17 adjacente à la gorge de montage 12 propice à l'accumulation de matières diverses.

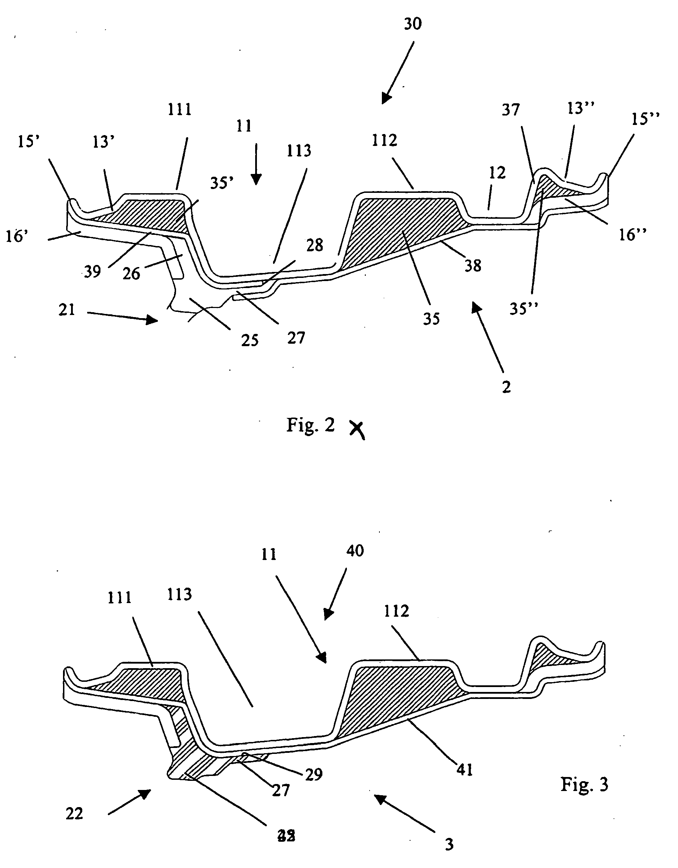

A la figure 2 est présenté un premier mode de réalisation d'une roue selon l'invention. Cette roue 2, monobloc, est constituée par l'assemblage d'un disque 21 et d'une jante 30. La géométrie radialement extérieure de la jante 30 de cette roue 2 est tout à fait similaire à celle de la roue 1 : on a notamment deux sièges 13' et 13", prolongées axialement extérieurement par deux humps 15' et 15", une paroi cylindrique comportant deux parties 111 et 112 séparées par une gorge circonférentielle 113 et une gorge de montage 12.

En revanche, le profil radialement intérieur de cette roue est très sensiblement différent puisque entre le siège intérieur 13" et la liaison avec la zone de transition 25 du disque 21, le diamètre diminue continûment. Ce profil n'offre aucune zone propice à l'accumulation de matières diverses. Ce résultat est obtenu grâce notamment à la présence dans la jante d'une structure circonférentielle 35 constituée d'un matériau de faible densité et disposée sous la partie 112 de la paroi cylindrique ou portée 11. Le profil radialement extérieur d'une telle jante correspond au profil de la jante de la roue 1. Cette structure circonférentielle permet ainsi de dissocier les profils radialement intérieur et extérieur de la roue.

La jante 30 comprend aussi deux autres structures circonférentielles d'allégement disposées sous les sièges de jante. La structure 35' sous le siège extérieur 13', la structure 35" sous le siège intérieur 13". La structure 35' s'étend aussi sous la partie 111 de la portée 11. Là encore, la présence de ces structures circonférentielles d'allègement permettent de dissocier les profils intérieur et extérieur de la jante.

Il est à noter que le mode de réalisation de la jante ne permet pas de réaliser une butée pour l'appui telle que la butée 16 présente sur la figure 1 de la roue métallique. Le blocage latéral de l'appui dans la direction intérieur véhicule doit se faire en utilisant un autre moyen. Ce blocage peut se faire, par exemple, en modifiant la semelle des appuis et/ou les diamètres des portées 111 et 112. Par exemple, on peut avoir deux diamètres intérieurs différents pour la semelle des appuis et les portées 111 et 112 de telle sorte que le plus petit diamètre puisse passer sur le diamètre de la zone 111, mais pas sur le diamètre de la zone 112. L'appui est alors bloqué dans la direction intérieur véhicule. Un exemple d'une telle géométrie de jante est donné à la figure 7 de la demande WO 00/05083.

La jante 30 comprend aussi des structures locales de renfort 16' et 16" sous les humps 15' et 15". Ces structures locales de renfort sont des structures composites stratifiées constituées d'au moins un tissu de fibres longues orientées selon deux directions distinctes et imprégnées en même temps que le reste de la structure de la roue par la résine thermodurcissable.

Dans le cas d'une dimension de roue 205x460 A, 205 étant la largeur de la roue en millimètres et 460 le diamètre nominal de la roue, A veut dire asymétrique (les deux sièges sont de diamètres différents), une comparaison des masses entre les roues de type 1 et 2 donne une diminution de masse de l'ordre de 1,5 kg à l'avantage de la roue 2, les structures composites stratifiées étant réalisées à partir de fibres de verre et de résine. Ce gain de masse est dû à la fois aux bonnes caractéristiques du matériau composite employé en regard de sa densité mais également à l'utilisation des structures circonférentielles de faible densité.

La jante 30 est obtenue par mise en place de préformes réalisées suivant le brevet EP 0 842 757 et des éléments 35, 35' et 35" de faible densité moulés ou usinés.

Plus précisément, pour fabriquer la jante 30, on commence par mettre en place dans le moule la préforme 38 qui correspond au profil radialement intérieur de la jante, du côté intérieur véhicule, puis la structure locale de renfort 16". On positionne ensuite la préforme 37 qui correspond au profil radialement extérieur de la jante, en ayant pris soin de mettre en place au préalable dans cette préforme les trois structures circonférentielles d'allégement 35, 35' et 35". On positionne ensuite le bord radialement extérieur 25 du disque 21 et la préforme 39 entre les préformes 37 et 38. Pour finir, on peut ajouter la structure de renforcement locale 16'. Le moule peut alors être fermé. Une fois le moule fermé, une résine est injectée, imprègne les fibres de renforcement et polymérise sous l'action de la chaleur. La résine utilisée est une résine thermodurcissable usuelle de type polyester, vinylester ou époxy.

Le bord radialement extérieur 25 du disque 21 a sa géométrie adaptée pour pouvoir loger la préforme 39. Une fois l'imprégnation et la polymérisation réalisée, les efforts axiaux tendant à séparer la jante du disque sont principalement repris par l'encastrement de la branche 26 du bord radialement extérieur 25 du disque 21 entre la préforme 39 et la structure de renfort 16' ainsi que par l'encastrement de la branche 27 du bord radialement extérieur 25 entre la préforme 39 et la préforme 38. Ce système de liaison mécanique entre le disque et la jante exploite la souplesse de la préforme 39 lors de la mise en place du disque dans le moule. Ceci ne pose pas de problème en pratique car les préformes ont une faible rigidité.

La figure 3 présente une roue 3, variante de réalisation de la roue 2. La jante 40 de cette roue 3 se distingue de la jante 30 par la géométrie de la zone de liaison disque/jante. Avec ce type de liaison, la liaison est principalement réalisée par collage. Le disque 22 est préparé chimiquement avant l'injection de résine. Lors de la polymérisation de la résine, un collage chimique s'effectue. La reprise des efforts radiaux s'effectue cette fois-ci principalement par le cisaillement de la colle sur la surface 29, zone de liaison entre la branche axialement intérieure 27 du bord radialement extérieur 25 du disque 22 et la préforme 41 de la jante 40. Ici, la préforme 41 peut s'étendre axialement sur l'ensemble du profil radialement intérieur de la jante 40.

La gorge circonférentielle 113, que présentent les deux roues 2 et 3, peut notamment servir à mettre en place un module de roue incluant un capteur de pression d'un système de surveillance de la pression des pneumatiques d'un véhicule. Une telle localisation ne perturbe en aucune façon le montage et le démontage du pneumatique.

Les appuis destinés à être enfilés sur la paroi cylindrique 11 ont usuellement une largeur telle qu'ils s'appuient sur les deux parties 111 et 112 de cette paroi ou portée.

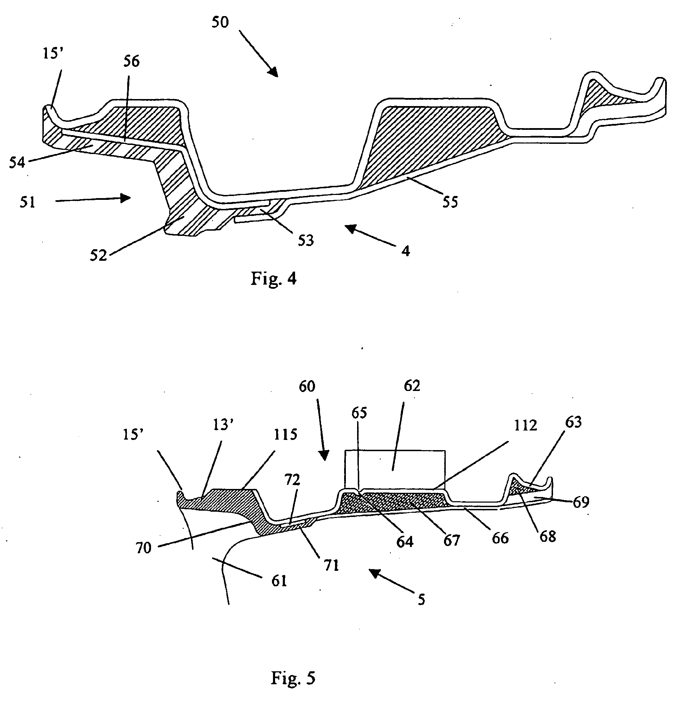

La figure 4 présente un second mode de réalisation d'une roue selon l'invention. La roue 4 a un disque métallique 51 qui a la propriété de se prolonger jusqu'au hump 15' de la jante 50. Le bord radialement extérieur 52 du disque 51 a sa branche 54 qui s'étend jusqu'à former l'extrémité axialement extérieure du hump 15'. La seconde branche 53 de ce bord radialement extérieur 52 est encastrée comme précédemment (voir Fig. 2). Le profil radialement intérieur est obtenu ici avec deux préformes 55, 56 comme précédemment. Ce type de disque permet de supprimer le renforcement local 16' sous le hump 15', car le disque métallique amène la plupart du temps la rigidité nécessaire dans cette zone. Ce type de liaison permet en outre d'obtenir facilement pour la roue des designs dits 'full-face'.

La figure 5 présente un troisième mode de réalisation d'une roue selon l'invention. Dans cette variante, la roue 5 est prévue pour recevoir un appui allégé 62. Seule la zone cylindrique 112 est destinée à supporter cet appui. Le disque 61 constitué d'un matériau métallique s'étend axialement et radialement jusqu'au hump 15' mais forme également le siège 13' et une zone cylindrique 115 de la jante 60. La zone cylindrique 115 ne soutient pas l'appui 62 et est en contact direct avec l'air interne du pneumatique. Ce contact direct avec l'air interne permet d'évacuer une partie des calories générées lors du roulage à plat. Ainsi la nature isolante de la jante composite pénalisera peu la performance des appuis en roulage à plat.

Cette jante 60 comporte une préforme 63 donnant le profil radialement extérieur de la jante. Cette préforme est moulée de telle sorte qu'elle comporte une rainure 64 destinée à coopérer avec une saillie 65 de l'appui 62 pour bloquer axialement l'appui. Le profil radialement intérieur de la jante 60 est donné par une préforme 66. Entre les deux préformes 63 et 66, sont disposées deux structures circulaires d'allègement 67 et 68 ainsi qu'une structure de renfort 69. Le bord radialement extérieur 70 du disque 61 comprend une branche 71 qui est encastrée entre la préforme 66 et une structure circonférentielle 72 pour obtenir une liaison mécaniquement solide.

L'ensemble des exemples présentés, à titre non limitatif, montre l'intérêt de la dissociation des profils intérieurs et extérieurs de la roue liée au procédé choisi pour réaliser les jantes. Cet ensemble montre aussi la souplesse dont dispose le concepteur de la roue pour répondre à ses besoins. Ce procédé a notamment été présenté dans le cadre d'une géométrie très particulière de la jante, mais il peut s'appliquer à tous les types de profils connus de jante.

## Revendications

1. Roue (2,3,4,5) pour pneumatique dont la géométrie radialement extérieure comporte un premier (13') et un deuxième (13") sièges destinés à recevoir un bourrelet de pneumatique, au moins le premier siège (13') ayant une génératrice dont l'extrémité axialement extérieure est sur un cercle de diamètre inférieur au diamètre du cercle sur lequel se trouve l'extrémité axialement intérieure, au moins ledit premier siège (13') étant prolongé axialement à l'extérieur par une saillie ou hump (15') de faible hauteur, ledit premier siège (13') étant prolongé axialement à l'intérieur par une paroi cylindrique (11), **caractérisée en ce que** ladite roue est constituée par l'assemblage :
■ d'un disque (21, 22, 51, 61) comportant une portée moyeu, une zone de transition et un bord radialement extérieur (25, 52 70) ; et
■ d'une jante (30, 40, 50, 60) avec :
• au moins une première structure composite stratifiée (37, 63) constituée d'au moins un tissu de fibres longues orientées selon deux directions distinctes et imprégnées par une résine réticulée dont la paroi radialement extérieure correspond à la paroi radialement extérieure de ladite jante ou à une partie de celle-ci ;
• au moins une seconde structure composite stratifiée (38, 39, 55, 56, 66) constituée d'au moins un tissu de fibres longues orientées selon deux directions distinctes et imprégnées par une résine réticulée dont la paroi radialement extérieure correspond à la paroi radialement intérieure de ladite jante ou à une partie de celle-ci ; et
• au moins une structure circonférentielle d'allégement (35, 35', 35", 67, 68) constituée d'un matériau à faible densité, disposée radialement entre lesdites première et seconde structures composites stratifiée.

2. Roue (2, 3, 4, 5) selon la revendication 1, dans laquelle ladite structure circonférentielle d'allégement (35, 35', 67) est disposée axialement entre ledit premier siège (13') et une gorge de montage (12).

3. Roue (2, 3, 4) selon la revendication 1, dans laquelle, ladite paroi cylindrique (11) étant composée de deux portées (111, 112) disposées axialement de part et d'autre d'une gorge circonférentielle (113), une première structure circonférentielle d'allègement (35') est disposée axialement entre ledit premier siège (13') et ladite gorge circonférentielle (113) et une seconde structure circonférentielle d'allègement (35) est disposée axialement entre lesdites gorges circonférentielle (113) et de montage (12).

4. Roue (2, 3, 4, 5) selon l'une des revendications 1 à 3, dans laquelle la paroi radialement intérieure de la jante a une distance axiale qui diminue progressivement à partir du second siège (13") jusqu'à la zone d'assemblage avec le disque.

5. Roue (2, 3, 4, 5) selon l'une des revendications 1 à 4, dans laquelle ledit second siège (13") comporte une structure circonférentielle de renfort (16", 69) complémentaire.

6. Roue (2, 3, 4) selon l'une des revendications 1 à 5, dans laquelle ledit premier siège (13') comporte une structure circonférentielle de renfort (16') complémentaire.

7. Roue (2, 3, 4, 5) selon l'un des revendications 5 et 6, dans laquelle les structures circonférentielles de renfort complémentaires (16', 16", 69) sont constituées de structures composites stratifiées.

8. Roue (2, 3, 4, 5) selon l'une des revendications 1 à 7, dans laquelle le second siège (13") comporte une structure circonférentielle d'allègement (35", 68).

9. Roue (2, 3, 4) selon l'une des revendications 1 à 8, dans laquelle le premier siège (13') comporte une structure circonférentielle d'allègement (35').

10. Roue (2, 3, 4, 5) selon l'une des revendications 1 à 9, dans laquelle les structures circonférentielles d'allégement sont constituées d'un matériau à faible densité choisi dans le groupe des mousses de polyuréthanne (PU), de polystyrène, de polychlorure de vinyle (PVC), des mousses syntactiques et du balsa.

11. Roue (4, 5) selon l'une des revendications 1 à 10, dans laquelle ledit bord radialement extérieur (52, 70) dudit disque (51, 61) s'étend axialement et radialement jusqu'à former au moins l'extrémité axialement extérieure dudit hump extérieur (15').

12. Roue (5) selon l'une des revendications 3 à 11, dans laquelle, ledit bord radialement extérieur dudit disque (61) s'étend axialement et radialement jusqu'à former le premier siège (13'), la saillie (15') du premier siège et la portée adjacente (115) audit premier siège (13').

13. Roue (2, 3, 4, 5) pour pneumatique constituée par l'assemblage:
■ d'un disque (21, 22, 51, 61) comportant une portée moyeu, une zone de transition et un bord radialement extérieur (25, 52 70) ; et
■ d'une jante (30, 40, 50, 60) constituée :
• d'au moins une première structure composite stratifiée (37, 63) constituée d'au moins un tissu de fibres longues orientées selon deux directions distinctes et imprégnées par une résine thermodurcissable dont la paroi radialement extérieure correspond à la paroi radialement extérieure de ladite jante ou à une partie de celle-ci ;
• d'au moins une seconde structure composite stratifiée (38, 39, 55, 56, 66) constituée d'au moins un tissu de fibres longues orientées selon deux directions distinctes et imprégnées par une résine thermodurcissable dont la paroi radialement extérieure correspond à la paroi radialement intérieure de ladite jante ou à une partie de celle-ci ; et
• d'au moins une structure circonférentielle d'allégement (35, 35', 35", 67, 68) constituée d'un matériau à faible densité, disposée radialement entre lesdites première et seconde structures composites stratifiées.

## Claims

1. A wheel (2, 3, 4, 5) for tyres the radially outer geometry of which comprises a first (13') and a second (13") seat intended to receive a tyre bead, at least the first seat (13') having a generatrix, the axially outer end of which is on a circle of diameter less than the diameter of the circle on which the axially inner end is located, at least said first seat (13') being extended axially to the outside by a protrusion or hump (15') of low height, said first seat (13') being extended axially to the inside by a cylindrical wall (11), **characterised in that** said wheel is constituted by the assembly:
■ of a disc (21, 22, 51, 61) comprising a hub bearing surface, a transition zone and a radially outer edge (25, 52 70) ; and
■ of a rim (30, 40, 50, 60) with:
• at least a first laminated composite structure (37, 63) formed of at least one fabric of long fibres which are oriented in two distinct directions and impregnated by a cross-linked resin, the radially outer wall of which corresponds to the radially outer wall of said rim or to part thereof;
• at least a second laminated composite structure (38, 39, 55, 56, 66) formed of at least one fabric of long fibres which are oriented in two distinct directions and impregnated by a cross-linked resin, the radially outer wall of which corresponds to the radially inner wall of said rim or to part thereof; and
• at least a circumferential weight-reduction structure (35, 35', 35", 67, 68) formed of a material of low density, arranged radially between said first and second laminated composite structures.

2. A wheel (2, 3, 4, 5) according to Claim 1, in which said circumferential weight-reduction structure (35, 35', 67) is arranged axially between said first seat (13') and a mounting groove (12).

3. A wheel (2, 3, 4) according to Claim 1, in which, said cylindrical wall (11) being composed of two bearing surfaces (111, 112) arranged axially on either side of a circumferential groove (113), a first circumferential weight-reduction structure(35') is arranged axially between said first seat (13') and said circumferential groove (113) and a second circumferential weight-reduction structure (35) is arranged axially between said circumferential (113) and mounting (12) grooves.

4. A wheel (2, 3, 4, 5) according to one of Claims 1 to 3, in which the radially inner wall of the rim has an axial distance which gradually decreases from said second seat (13") as far as the zone of assembly with the disc.

5. A wheel (2, 3, 4, 5) according to one of Claims 1 to 4, in which said second seat (13") comprises a complementary circumferential reinforcement structure (16", 69).

6. A wheel (2, 3, 4) according to one of Claims 1 to 5, in which said first seat (13') comprises a complementary circumferential reinforcement structure (16').

7. A wheel (2, 3, 4, 5) according to one of Claims 5 and 6, in which the complementary circumferential reinforcement structures (16', 16", 69) are constituted by laminated composite structures.

8. A wheel (2, 3, 4, 5) according to one of Claims 1 to 7, in which the second seat (13") comprises a circumferential weight-reduction structure (35", 68).

9. A wheel (2, 3, 4) according to one of Claims 1 to 8, in which the first seat (13') comprises a circumferential weight-reduction structure (35').

10. A wheel (2, 3, 4, 5) according to Claims 1 to 9, in which the circumferential weight-reduction structures are formed of a material of low density selected from the group of polyurethane (PU), polystyrene and polyvinyl chloride (PVC) foams, syntactic foams and balsa.

11. A wheel (4, 5) according to one of Claims 1 to 10, in which said radially outer edge (52, 70) of said disc (51, 61) extends axially and radially until it forms at least the axially outer end of said outer hump (15').

12. A wheel (5) according to one of Claims 3 to 11, in which said radially outer edge of said disc (61) extends axially and radially until it forms the first seat (13'), the hump (15') of the first seat and the cylindrical zone (115) adjacent to said first seat of the rim.

13. A wheel (2, 3, 4, 5) for a tyre formed by the assembly:
■ of a disc (21, 22, 51, 61) comprising a hub bearing surface, a transition zone and a radially outer edge (25, 52 70); and
■ of a rim (30, 40, 50, 60) formed:
• of at least a first laminated composite structure (37, 63) formed of at least one fabric of long fibres which are oriented in two distinct directions and impregnated by a thermohardening resin, the radially outer wall of which corresponds to the radially outer wall of said rim or to part thereof;
• of at least a second laminated composite structure (38, 39, 55, 56, 66) formed of at least one fabric of long fibres which are oriented in two distinct directions and impregnated by a thermohardening resin, the radially outer wall of which corresponds to the radially inner wall of said rim or to part thereof; and
• of at least a circumferential weight-reduction structure (35, 35', 35", 67, 68) formed of a material of low density, arranged radially between said first and second laminated composite structures.

## Patentansprüche

1. Rad (2, 3, 4, 5) für einen Reifen, dessen radial äußere Geometrie eine erste (13') und eine zweite (13") Schulter umfasst, die dazu bestimmt sind, einen Reifenwulst aufzunehmen, wobei mindestens die erste Schulter (13') einen Generator aufweist, dessen axial äußeres Ende sich auf einem Kreis mit einem Durchmesser befindet, der kleiner als der Durchmesser des Kreises ist, auf dem sich das axial innere Ende befindet, wobei mindestens die erste Schulter (13') axial nach außen durch einen Vorsprung oder Hump (15') mit geringer Höhe ausgedehnt ist, wobei die erste Schulter (13') axial nach innen durch eine zylinderische Wand (11) ausgedehnt ist, **dadurch gekennzeichnet, dass** das Rad aus folgendem Zusammenbau besteht:
- einer Schüssel (21, 22, 51, 61), umfassend eine Nabentragweite, eine Übergangszone und eine radial äußere Kante (25, 52, 70); und
- einer Felge (30, 40, 50, 60) mit:
- mindestens einer ersten Schichtverbundstruktur (37, 63), die aus mindestens einem Gewebe mit langen Fasern besteht, die nach zwei verschiedenen Richtungen ausgerichtet sind und mit einem vernetzten Harz imprägniert sind, deren radial äußere Wand der radial äußeren Wand der Felge oder einem Teil von dieser entspricht;
- mindestens einer zweiten Schichtverbundstruktur (38, 39, 55, 56, 66), die aus mindestens einem Gewebe mit langen Fasern besteht, die nach zwei verschiedenen Richtungen ausgerichtet sind und mit einem vernetzten Harz imprägniert sind, deren radial äußere Wand der radial inneren Wand der Felge oder einem Teil von dieser entspricht; und
- mindestens einer Umfangserleichterungsstruktur (35, 35', 35", 67, 68), die aus einem Material mit geringer Dichte besteht, die radial zwischen der ersten und zweiten Schichtverbundstruktur angeordnet ist.

2. Rad (2, 3, 4, 5) nach Anspruch 1, wobei die Umfangserleichterungsstruktur (35, 35', 67) axial zwischen der ersten Schulter (13') und einer Befestigungsrille (12) angeordnet ist.

3. Rad (2, 3, 4) nach Anspruch 1, wobei die zylindrische Wand (11) aus zwei Tragweiten (111, 112) zusammengesetzt ist, die axial auf beiden Seiten einer Umfangsrille (113) angeordnet sind, wobei eine erste Umfangserleichterungsstruktur (35') axial zwischen der ersten Schulter (13') und der Umfangsrille (113) angeordnet ist und eine zweite Umfangserleichterungsstruktur (35) axial zwischen den Umfangsrillen (113) und der Befestigungsrille (12) angeordnet ist.

4. Rad (2, 3, 4, 5) nach einem der Ansprüche 1 bis 3, wobei die radial innere Wand der Felge einen axialen Abstand aufweist, der ab der zweiten Schulter (13") bis zur Zusammenbauzone mit der Schüssel progressiv abnimmt.

5. Rad (2, 3, 4, 5) nach einem der Ansprüche 1 bis 4, wobei die zweite Schulter (13") eine komplementäre Umfangsverstärkungsstruktur (16" , 69) umfasst.

6. Rad (2, 3, 4) nach einem der Ansprüche 1 bis 5, wobei die erste Schulter (13') eine komplementäre Umfangsverstärkungsstruktur (16') umfasst.

7. Rad (2, 3, 4, 5) nach einem der Ansprüche 5 bis 6, wobei die komplementären Umfangsverstärkungsstrukturen (16', 16" , 69) aus Schichtverbundstrukturen bestehen.

8. Rad (2, 3, 4, 5) nach einem der Ansprüche 1 bis 7, wobei die zweite Schulter (13") eine Umfangserleichterungsstruktur (35", 68) umfasst.

9. Rad (2, 3, 4) nach einem der Ansprüche 1 bis 8, wobei die erste Schulter (13') eine Umfangserleichterungsstruktur (35') umfasst.

10. Rad (2, 3, 4, 5) nach einem der Ansprüche 1 bis 9, wobei die Umfangserleichterungsstrukturen aus einem Material mit geringer Dichte bestehen, das aus der Gruppe von Polyurethan-Schaum (PU), Polystyrol-Schaum, Polyvinylchlorid-Schaum (PVC), syntaktischen Schäumen und Balsa ausgewählt ist.

11. Rad (4, 5) nach einem der Ansprüche 1 bis 10, wobei sich die radial äußere Kante (52, 70) der Schüssel (51, 61) axial und radial erstreckt, bis sie mindestens das axial äußere Ende des äußeren Humps (15') bildet.

12. Rad (5) nach einem der Ansprüche 3 bis 11, wobei sich die radial äußere Kante der Schüssel (61) axial und radial erstreckt, bis sie die erste Schulter (13'), den Vorsprung (15') der ersten Schulter und die an die erste Schulter (13') angrenzende Tragweite (115) bildet.

13. Rad (2, 3, 4, 5) für einen Reifen, bestehend aus dem Zusammenbau:
- einer Schüssel (21, 22, 51, 61), umfassend eine Nabentragweite, eine Übergangszone und eine radial äußere Kante (25, 52, 70); und
- einer Felge (30, 40, 50, 60), bestehend aus:
- mindestens einer ersten Schichtverbundstruktur (37, 63), die aus mindestens einem Gewebe mit langen Fasern besteht, die nach zwei verschiedenen Richtungen ausgerichtet sind und mit einem Duroplast imprägniert sind, deren radial äußere Wand der radial äußeren Wand der Felge oder einem Teil von dieser entspricht;
- mindestens einer zweiten Schichtverbundstruktur (38, 39, 55, 56, 66), die aus mindestens einem Gewebe mit langen Fasern besteht, die nach zwei verschiedenen Richtungen ausgerichtet sind und mit einem Duroplast imprägniert sind, deren radial äußere Wand der radial inneren Wand der Felge oder einem Teil von dieser entspricht; und
- mindestens einer Umfangserleichterungsstruktur (35, 35', 35" , 67, 68), die aus einem Material mit geringer Dichte besteht, die radial zwischen der ersten und zweiten Schichtverbundstruktur angeordnet ist.
